# EUROPÄISCHE PATENTSCHRIFT

(11) **EP 2 656 115 B1**
(45) Veröffentlichungstag und Bekanntmachung des Hinweises auf die Patenterteilung: **22.07.2015**
(21) Anmeldenummer: 11790576.0
(22) Anmeldetag: 16.11.2011
(51) Int. Cl.: G01V 3/12, H01Q 21/24

(54) **HANDORTUNGSVORRICHTUNG, ORTUNGSGERÄT UND VERFAHREN ZUR ORTUNG**
MANUAL POSITIONING DEVICE, POSITIONING DEVICE, AND METHOD FOR POSITIONING
DISPOSITIF DE LOCALISATION MANUEL, APPAREIL DE LOCALISATION ET PROCÉDÉ DE LOCALISATION

(30) Priorität: 21.12.2010 DE 102010063666
(43) Veröffentlichungstag der Anmeldung: 30.10.2013
(73) Patentinhaber: Robert Bosch GmbH, 70442 Stuttgart (DE)
(72) Erfinder: POHLMANN, Martin, 70567 Stuttgart (DE)
(86) Internationale Anmeldenummer: PCT/EP2011/070254
(87) Internationale Veröffentlichungsnummer: WO 2012/084348

(56) Entgegenhaltungen:
- WO-A2-2006/124520
- DE-A1- 10 026 519
- DE-A1-102008 041 651
- US-A- 5 621 325
- US-B1- 6 525 329

## Beschreibung

### Stand der Technik

Die Erfindung geht aus von einer Ortungsvorrichtung zur Detektion von in einem Medium eingeschlossenen Objekten nach dem Oberbegriff des Anspruchs 1.

Es ist bereits eine Ortungsvorrichtung, insbesondere zur Ortung eines in einer Wand angeordneten Messobjekts, mit einer Sende- und/oder Empfangseinheit, die zumindest eine Antenne aufweist, vorgeschlagen worden.

Die DE 10 2008 041 651 A1 offenbart ein Ortungsgerät mit einer LCR-Antennenvorrichtung, die eine Antenneneinheit mit einer ersten Polarisationsrichtung aufweist und die zu einem Aussenden und/oder Empfangen eines Messsignals mit der ersten Polarisationsrichtung vorgesehen ist, wobei die Antenneneinheit der DE 10 2008 041 651 A1 zumindest eine zweite Polarisationsrichtung zu einem Aussenden und/oder Empfangen des Messsignals aufweist.

### Offenbarung der Erfindung

Die Erfindung geht aus von einer Ortungsvorrichtung, insbesondere einer Handortungsvorrichtung zur Ortung eines in einer Wand angeordneten Messobjekts, mit einer Sende- und/oder Empfangseinheit, die zumindest eine Antenne aufweist. Unter einer Handortungsvorrichtung wird eine Detektionseinheit verstanden, die aufgrund ihrer Größe und Ihres Gewichtes geeignet ist, in ein Handortungsgerät, d.h. in ein handgehaltenes Ortungsgerät, integriert zu werden. Ein derartiges Handortungsgerät wird von einem Nutzer bei Messvorgang vollständig in der Hand gehalten und über die Oberfläche eines zu untersuchenden Mediums geführt.

Es wird vorgeschlagen, dass die Sende- und/oder Empfangseinheit zumindest eine Schalteinheit aufweist, die dazu vorgesehen ist, zwischen wenigstens zwei Sende- und/oder Empfangscharakteristiken umzuschalten. Unter einer Sende- bzw. Empfangscharakteristik soll im Folgenden insbesondere die Abstrahlcharakteristik oder auch Richtcharakteristik der Sende- bzw. Empfangseinheit verstanden werden.

Im Gegensatz zu den bislang genutzten Verfahren wird im erfindungsgemäßen Messsystem der Ortungsvorrichtung eine Antenne genutzt, welche in der Lage ist, verschiedene Abstrahlcharakteristika zu erzeugen. Diese einzelnen Abstrahlcharakteristika zeichnen sich durch verschiedene Hauptstrahlrichtungen aus. Nach der Detektion eines Zielobjektes wird durch Vergleich der Empfangssignale, welche sich bei den verschiedenen Abstrahlcharakteristika ergeben, entschieden, ob sich ein Zielobjekt direkt vor dem Messsystem oder in einem Winkel zu diesem befindet.

Dazu werden erfindungsgemäß Antennen eingesetzt, die je nach Anregung verschiedene Richtcharakteristika aufweisen. Die verschiedenen Richtcharakteristika können durch verschiedene Anregungsarten der verwendeten Antenne erreicht werden. So können beispielsweise jeweils nur zwei Eingänge (Port) einer vierportigen Antenne genutzt werden, um ein Sendesignal einzuspeisen. Im speziellen kann beispielsweise eine LCR (Large Current Radiator) Antenne verwendet werden. Normalerweise wird eine solche Antenne differentiell angeregt (Gegentakt Anregung zweier ports). Eine solche differentielle Anregung der Antenne führt zu einer Abstrahlcharakteristik der Antenne mit der Hauptstrahlrichtung senkrecht zur Antennenmitte. Wird jetzt eine Single-Port Anregung oder auch eine Gleichtaktanregung verwendet, so ergeben sich unterschiedliche Richtcharakteristiken, die zudem auch noch nacheinander durchgeschaltet werden können.

Eine weitere, alternative Möglichkeit ist, eine Antenne zu verwenden, die bei verschiedenen Frequenzen verschiedene Richtcharakteristika aufweist.

Besondere Vorteile bringt die Erfindung in Messszenarien, in denen es nicht möglich ist, die Ortungsvorrichtung zu bewegen bzw. eine Aufzeichnung der relativen Position der Messvorrichtung nicht möglich bzw. gewünscht ist.

Weiterhin vorteilhaft ist die Erfindung in Messszenarien, in denen nur ein sehr begrenzter Raum für die Ortungsvorrichtung vorhanden ist und daher die Verwendung von Antennenarrays bzw. von großflächigen Antennen mit sehr hohem Gewinn nicht möglich ist. Des Weiteren in Messszenarien, in denen auf eine mechanische Bewegung (Schwenken) der Antenne verzichtet werden soll.

Im Speziellen bringt die Erfindung Vorteile, wenn sie in mobilen, insbesondere handgehaltenen Wandscannergeräten oder auch als Zusatzsensorik in Elektrowerkzeugen eingesetzt wird. Dort ist es mit Hilfe der Erfindung bei einer stationären Messung möglich, die laterale Position bzw. den Sichtwinkel eines Zielobjektes genauer zu bestimmen.

Unter einer "Ortung" soll insbesondere eine Bestimmung von zumindest einer Information über eine Position und/oder eine Existenz eines fernen, unsichtbaren und/oder vorteilhaft verdeckten Messobjekts verstanden werden. Vorzugsweise ist bei der Ortung ein, insbesondere direkter, taktiler Kontakt zwischen der Handortungsvorrichtung und dem zu ortenden Messobjekt unnötig. Insbesondere soll unter einer "Sende- und/oder Empfangseinheit" eine Einheit verstanden werden, die dazu vorgesehen ist, ein insbesondere elektromagnetisches Signal auszusenden und eine Reflexion des ausgesendeten Signals zu empfangen. Vorzugsweise demoduliert die Sende- und/oder Empfangseinheit eine dem Fachmann als sinnvoll erscheinende Kenngröße, vorteilhaft jedoch eine Laufzeit, eine Frequenz, eine Amplitude und/oder besonders vorteilhaft eine Phasenlage des reflektierten Signals. Unter einer "Antenne" soll insbesondere ein Mittel verstanden werden, das dazu vorgesehen ist, eine Leistung in Form einer insbesondere elektromagnetischen Welle, insbesondere im Mikrowellenbereich, drahtlos auszusenden und/oder zu empfangen. Insbesondere soll unter einer "Schalteinheit" eine Einheit verstanden werden, die dazu vorgesehen ist, zumindest eine Schnittstelle, vorteilhaft zumindest zwei Schnittstellen, der Antenne in verschiedenen Betriebszuständen unterschiedlich zu verschalten. Vorzugsweise verbindet die Schalteinheit die Antenne insbesondere wahlweise mit einem Signalgenerator, einem Demodulator und/oder einem an die Antenne angepassten Abschlusswiderstand. Unter "vorgesehen" soll insbesondere speziell programmiert, ausgelegt und/oder ausgestattet verstanden werden. Insbesondere soll unter einer "Sende- und/oder Empfangscharakteristik" eine Eigenschaft zumindest der einen Antenne verstanden werden, die eine in eine Richtung ausgesendete Signalstärke in Abhängigkeit von der Richtung relativ zu der Antenne beschreibt. Vorzugsweise weist die Antenne eine Hauptstrahlrichtung auf, deren Richtung bei den beiden Sende- und/oder Empfangscharakteristiken um wenigstens 5 Grad, vorteilhaft um wenigstens 10 Grad, besonders vorteilhaft um wenigstens 20 Grad, unterschiedlich ist. Vorzugsweise sind die Sende- und/oder Empfangscharakteristiken Eigenschaften von mehreren Antennen mit mehreren Strahlern, von einer Antenne mit mehreren Strahlern und/oder von einer Antenne mit einem Strahler. Vorteilhaft verändert sich die Sende- und/oder Empfangscharakteristik der Antenne abhängig von einer Frequenz, besonders vorteilhaft abhängig von einer Beschaltung. Unter einer "Hauptstrahlrichtung" soll insbesondere eine Richtung verstanden werden, in die die Antenne in einem Betriebszustand eine maximale Leistung abstrahlt, das heißt, in die die Antenne einen maximalen Antennengewinn aufweist. Insbesondere soll unter der Wendung "zwischen zwei Sende- und/oder Empfangscharakteristiken umschalten" verstanden werden, dass die Schalteinheit dazu vorgesehen ist, zwischen zwei Sende- und/oder Empfangscharakteristiken zumindest einer Antenne zu wechseln. Durch die erfindungsgemäße Ausgestaltung der Handortungsvorrichtung kann konstruktiv einfach und platzsparend eine besonders genaue Ortung erreicht werden. Insbesondere ist eine besonders genaue Bestimmung einer lateralen Position möglich. Es kann vorteilhaft auf bewegliche Bauteile verzichtet werden.

In einer weiteren Ausgestaltung wird vorgeschlagen, dass die Handortungsvorrichtung eine Auswerteeinheit umfasst, die dazu vorgesehen ist, aus Signalen, die zumindest mit den wenigstens zwei Sende- und/oder Empfangscharakteristiken empfangen wurden, zumindest eine Positionsinformation über das Messobjekt zu ermitteln, wodurch konstruktiv besonders einfach eine genaue Messung möglich ist. Insbesondere kann eine Anordnung des Messobjekts an einer bestimmten Stelle, und zwar senkrecht vor der Antenne, besonders genau detektiert werden. Vorzugsweise weist die Auswerteeinheit eine Recheneinheit auf. Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Vorteilhaft ist die Recheneinheit als ein ASIC ausgebildet. Vorzugsweise ist die Auswerteeinheit zumindest teilweise einstückig mit dem Demodulator ausgebildet. Beispielsweise könnte die Auswerteeinheit zumindest einen Analog-Digitalwandler aufweisen und/oder eine Demodulation durch eine Berechnungsroutine erfolgen. Insbesondere soll in diesem Zusammenhang unter einem "Signal" eine von der Antenne ausgestrahlte, von dem Messobjekt reflektierte und von der Antenne empfangene Leistung verstanden werden. Unter einer "Positionsinformation" soll insbesondere eine Information über eine Position des Messobjekts relativ zu der Antenne verstanden werden. Unter einem "Messobjekt" soll insbesondere ein Objekt verstanden werden, das in einer Messrichtung von einem Material verdeckt ist und das andere Reflexionseigenschaften als dieses Material aufweist. Beispielsweise könnte ein Kabel, eine Rohrleitung, Bewehrungsstahl, ein dazu bestimmter Reflektor, ein Holzbalken und/oder Metallbalken ein Messobjekt in einer Wand, hinter einer Wand, in einer Decke und/oder in einem Boden bilden.

Des Weiteren wird vorgeschlagen, dass die Auswerteeinheit eine Auswerteroutine aufweist, die dazu vorgesehen ist, aus den Signalen zumindest eine Information über eine Position des Messobjekts auf zumindest einer Geraden senkrecht zu einer mittleren Detektionsrichtung zu bestimmen, wodurch eine besonders komfortable, schnelle und vielseitige Ortung möglich ist. Insbesondere kann konstruktiv besonders einfach eine Anordnung eines Messobjekts auf der mittleren Detektionsrichtung erfasst werden, wodurch beispielsweise eine Entscheidung, ein Loch an einer Stelle zu bohren oder nicht zu bohren, besonders vorteilhaft getroffen werden kann. Unter einer "Auswerteroutine" soll insbesondere ein Programm verstanden werden, das eine Berechnung zur Bestimmung der Position durchführt. Insbesondere soll unter einer "mittleren Detektionsrichtung" eine Richtung verstanden werden, die mittig zwischen den zwei Hauptstrahlrichtungen der Sende- und/oder Empfangscharakteristiken angeordnet ist. Vorzugsweise weist die Antenne zumindest eine dritte Sende- und/oder Empfangscharakteristik auf, deren Hauptstrahlrichtung parallel zu der mittleren Detektionsrichtung verläuft.

Ferner wird vorgeschlagen, dass die Auswerteeinheit dazu vorgesehen ist, eine Differenz der Signale mit einem vorzugsweise dynamisch ermittelten Schwellwert zu vergleichen, wodurch konstruktiv besonders einfach eine bestimmte Anordnung des Messobjekts erfasst werden kann. Alternativ oder zusätzlich könnten die Signale direkt verglichen und/oder dargestellt werden. Insbesondere soll unter einer "Differenz der Signale" ein Unterschied insbesondere einer - insbesondere komplexen - Amplitude einer Reflexion eines gesendeten Signals an einem Messobjekt verstanden werden. Unter einem "Schwellwert" soll insbesondere ein vorgegebener Absolut- oder Relativwert verstanden werden, dessen Über- und/oder Unterschreiten auf eine bestimmte Anordnung des Messobjekts hinweist. Insbesondere soll unter einem "dynamisch ermittelten Schwellwert" ein Schwellwert verstanden werden, den die Auswerteeinheit anhand der Signale bestimmt. Vorzugsweise weist ein Über- und/oder Unterschreiten des Schwellwerts insbesondere darauf hin, dass das Messobjekt zumindest teilweise auf der mittleren Detektionsrichtung angeordnet ist. Zudem wird vorgeschlagen, dass die Schalteinheit dazu vorgesehen ist, zwischen wenigstens zwei Sende- und/oder Empfangscharakteristiken einer einzelnen Antenne umzuschalten, wodurch geringe Kosten und ein geringer Raumbedarf erreicht werden können.

Weiterhin wird vorgeschlagen, dass die Schalteinheit dazu vorgesehen ist, ein Sendesignal mit zumindest zwei unterschiedlichen Phasenwinkeln und/oder Amplituden in zumindest eine Schnittstelle der Antenne einzuspeisen, wodurch konstruktiv einfach unterschiedliche Sende- und/oder Empfangscharakteristiken möglich sind. Vorzugsweise speist die Schalteinheit in zwei unterschiedlichen Betriebszuständen in eine einzige Schnittstelle zwei Sendesignale mit unterschiedlichen Phasenwinkeln bezogen auf ein weiteres jeweils gleichzeitig in eine Antenne eingespeistes Sendesignal ein. Besonders bevorzugt speist die Schalteinheit in eine Antenne gleichzeitig zwei Sendesignale mit unterschiedlichen Phasenwinkeln ein. Unter einem "Sendesignal" soll insbesondere ein Signal verstanden werden, das dazu vorgesehen ist, mittels der Antenne gesendet zu werden. Insbesondere sollen unter "unterschiedlichen Phasenwinkeln" Eigenschaften von Wechselspannungssignalen verstanden werden, die sich in einem Zeitpunkt ihrer Maxima unterscheiden. Vorteilhaft ist ein Phasenwinkel des Sendesignals relativ zu einem Phasenwinkel eines anderen Sendesignals veränderbar. Vorzugsweise werden beide Sendesignale in ein und dieselbe Antenne an unterschiedlichen Stellen eingespeist. Alternativ könnten die Sendesignale in getrennt ausgebildete Antennen eingespeist werden, die gemeinsam die wenigstens zwei Sende- und/oder Empfangscharakteristiken aufweisen. Unter einer "Schnittstelle der Antenne" soll insbesondere ein Speisepunkt der Antenne verstanden werden, der in zumindest einem betriebsbereiten Zustand leitend mit der Schalteinheit verbunden ist.

In einer vorteilhaften Ausbildung der Erfindung wird vorgeschlagen, dass die Schalteinheit dazu vorgesehen ist, zumindest eine Schnittstelle der Antenne in unterschiedlichen Betriebszuständen reflexionsfrei abzuschließen, wodurch konstruktiv einfach unterschiedliche Sende- und/oder Empfangscharakteristiken eingestellt werden können. Vorzugsweise wird die Antenne, wenn eine Schnittstelle reflexionsfrei angeschlossen ist, durch eine zweite Schnittstelle gespeist. Alternativ könnte die Schalteinheit die Antenne mit einem anderen, dem Fachmann als sinnvoll erscheinenden, komplexen Widerstand abschließen. Unter "reflexionsfrei" soll insbesondere verstanden werden, dass weniger als 6 dB, vorteilhaft weniger als 10 dB, besonders vorteilhaft weniger als 20 dB, einer von der Antenne über die Schnittstelle in die Schalteinheit geleiteten elektrischen Leistung zurück zur Antenne reflektiert werden.

Des Weiteren wird vorgeschlagen, dass die Antenne als eine LCR-Antenne ausgebildet ist, wodurch mit geringem Platzbedarf und konstruktiv einfach vorteilhafte Sende- und/oder Empfangscharakteristiken erreicht werden können. Unter einer "LCR-Antenne" soll insbesondere eine Antenne mit einem insbesondere rechteckigen Flächenstrahler und mit wenigstens zwei, alternativ vier, Schnittstellen verstanden werden, die über dreieckförmige Flächen mit dem Flächenstrahler verbunden sind. LCR steht dabei für (Large Current Radiator). Vorzugsweise ist der Flächenstrahler parallel zu einer Massefläche ausgerichtet. Vorzugsweise ist die mittlere Detektionsrichtung senkrecht zu einer Haupterstreckungsebene des Flächenstrahlers ausgerichtet.

Ferner geht die Erfindung aus von einem Handortungsgerät mit einer erfindungsgemäßen Ortungsvorrichtung. Unter einem "Handortungsgerät" soll dabei ein Ortungsgerät verstanden werden, das dazu vorgesehen ist, bei einem Messvorgang von einem Bediener in der Hand zumindest geführt, vorzugsweise getragen, zu werden. Besonders vorteilhaft ist das Handortungsgerät dazu vorgesehen, auf einer Baustelle eingesetzt zu werden.

Zudem geht die Erfindung aus von einem Handwerkzeug mit einer erfindungsgemäßen Handortungsvorrichtung, wodurch ein besonders sicherer Betrieb des Handwerkzeugs erreicht werden kann. Unter einem "Handwerkzeug" soll ein Mittel zur handgehaltenen Bearbeitung eines Werkstücks verstanden werden, wie beispielsweise eine Bohrmaschine, ein Bohrhammer, eine Säge, ein Hobel, ein Schrauber, eine Fräse, ein Schleifer, ein Winkelschleifer und/oder ein Multifunktionswerkzeug.

Weiterhin geht die Erfindung aus von einem Verfahren, insbesondere zur Ortung eines in einer Wand angeordneten Messobjekts, mit einer Handortungsvorrichtung, die eine Antenne aufweist.

Es wird vorgeschlagen, dass zwischen wenigstens zwei Sende- und/oder Empfangscharakteristiken umgeschaltet wird. Durch das erfindungsgemäße Verfahren kann konstruktiv einfach und platzsparend eine besonders genaue Ortung erreicht werden. Insbesondere kann auf bewegliche Bauteile verzichtet werden.
Bei dem erfindungsgemäßen Verfahren wird vorteilhafter Weise zwischen verschiedenen Anstrahlcharakteristiken umgeschaltet.

Für das erfindungsgemäße Verfahren werden Antennen eingesetzt, die je nach Anregung verschiedene Richtcharakteristika, d.h. Abstrahl- oder auch Sendecharakteristiken aufweisen. Die verschiedenen Richtcharakteristika können durch verschiedene Anregungsarten der verwendeten Antenne erreicht werden. Eine weitere Möglichkeit ist, eine Antenne zu verwenden, die bei verschiedenen Frequenzen verschiedene Richtcharakteristika aufweist.

Ein Zielobjekt, welches es zu detektieren gilt und welches sich an verschiedenen Positionen vor der Antenne befindet, führt bei Gegentaktanregung der Antenne zu einem speziellen Signalverlauf des Empfangssignals. Die Detektionsentscheidung ("*Objekt detektiert"* bzw. "*kein Objekt detektiert*") kann in speziellen beispielsweise per Schwellwertvergleich mit diesem Signal durchgeführt werden. Falls sich das Zielobjekt in einem es umgebenden Medium (z.B. eine Betonwand) befindet, muss zusätzlich dafür gesorgt werden, dass Reflexionen, welche am Umgebungsmedium (z.B. Wandoberfläche) entstehen, im Empfangssignal herausgefiltert werden. Hierzu existiert eine ganze Reihe von Methoden, die dem Fachmann bekannt sind.

Ist die Detektionsentscheidung durchgeführt und ein Zielobjekt erkannt worden, werden zusätzlich die Signale ausgewertet, die bei anderen Anregungsarten der Antenne gewonnen werden. Im Speziellen können das zum Beispiel Signale sein, die sich bei einer Gleichtaktanregung oder bei Einzelportanregungen der Antenne ergeben. Dadurch, dass die Antenne bei jeder Anregung eine unterschiedliche Richtcharakteristik aufweist und insbesondere eine andere Hauptstrahlrichtung hat, ergeben sich je nach Position des Zielobjekts verschiedene relative Signalstärken der einzelnen Signale zueinander. Im Speziellen ist es bei verdeckten Objekten insbesondere vorteilhaft, das Differenzsignal der Einzelportanregung auszuwerten, da Reflexionen von ausgedehnten homogenen Objekten (z.B. Wandreflexion) in diesem nicht mehr vorhanden sind.

Durch Vergleich der einzelnen, so erhaltenen Signale ist es möglich ...
a) zu entscheiden, befindet sich das detektierte Zielobjekt vor der Antenne oder
b) den Sichtwinkel des Zielobjekts in Bezug auf die Sendeantenne anzugeben oder
c) das Messsystem mit Hilfe der so gewonnenen Signale mittig über einem Zielobjekt auszurichten.

Dieses Zielobjekt kann auch künstlich zum Beispiel hinter einer Wand zu diesem Zweck angebracht werden.

Weiterhin lässt sich mit dem erfindungsgemäßen Verfahren der Detektionsbereich des Messsystems bei stationärer Messung verringern. Hierzu wird im Speziellen für die Detektionsentscheidung neben dem Überschreiten eines bestimmten Schwellwertes des differentiellen Empfangssignals zusätzlich verlangt, dass das Differenzsignal zweier Einzelport Anregungen betragsmäßig nicht größer ist, als ein bestimmter Schwellwert. Dies führt zu einer Messeinrichtung mit einer erhöhten Winkelselektivität vor dem Messgerät, so dass eine genauere Lokalisierung eines eingeschlossenen Objektes Möglich wird.

Das erfindungsgemäße Messsystem lässt sich auch auf 2 Dimensionen erweitern. Dazu werden Antennen verwendet, die die Möglichkeit haben Richtcharakteristiken zu erzeugen, die sich räumlich voneinander unterscheiden. Somit lassen sich Azimut und Elevationswinkel eines Zielobjektes angeben bzw. entscheiden ob sich ein Zielobjekt rechts, links, über oder unter dem Messsystem befindet.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Handortungsgerät mit einer erfindungsgemäßen Handortungsvorrichtung,
- Fig. 2: die Handortungsvorrichtung aus Figur 1 in einer schematischen Darstellung,
- Fig. 3: eine Antenne und Sende- und/oder Empfangscharakteristiken der Handortungsvorrichtung aus Figur 1 und
- Fig. 4: die Antenne der Handortungsvorrichtung aus Figur 1 in einer perspektivischen Darstellung.

### Beschreibung eines Ausführungsbeispiels

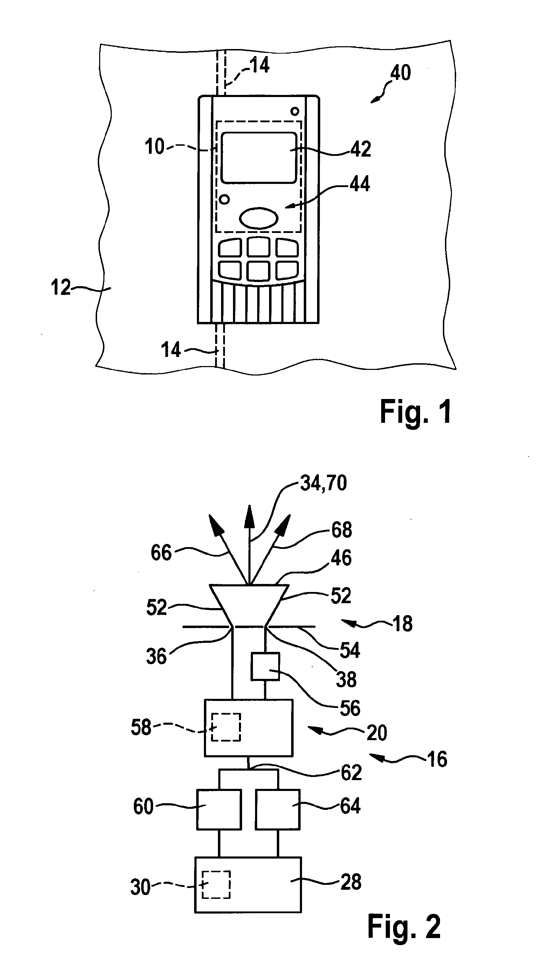

Figur 1 zeigt ein Handortungsgerät 40 mit einer erfindungsgemäßen Handortungsvorrichtung 10. Das Handortungsgerät 40 weist ein Display 42 auf, das bei einem Betrieb einem nicht näher dargestellten Bediener Messergebnisse anzeigt. Des Weiteren weist das Handortungsgerät 40 mehrere Bedienelemente 44 auf, die zur Einstellung von den Betrieb betreffenden Einstellungen vorgesehen sind. Der Bediener bewegt das Handortungsgerät 40 bei einem Betrieb entlang einer Oberfläche einer Wand 12. Alternativ oder zusätzlich könnte der Bediener das Handortungsgerät 40 auf die Wand aufsetzen und dort statisch eine Ortung vornehmen. Die Handortungsvorrichtung 10 sendet elektromagnetische Signale aus, und zwar auf einer dem Display 42 abgewandten Seite. Die Signale werden teilweise von einem in der Wand 12 angeordneten Messobjekt 14 reflektiert. Die Handortungsvorrichtung 10 empfängt einen Teil der Reflexionen und wertet diese zur Ortung des Messobjekts 14 aus. Durch die Wand 12 verursachte Reflexionen werden aus dem empfangenen Signal herausgefiltert.

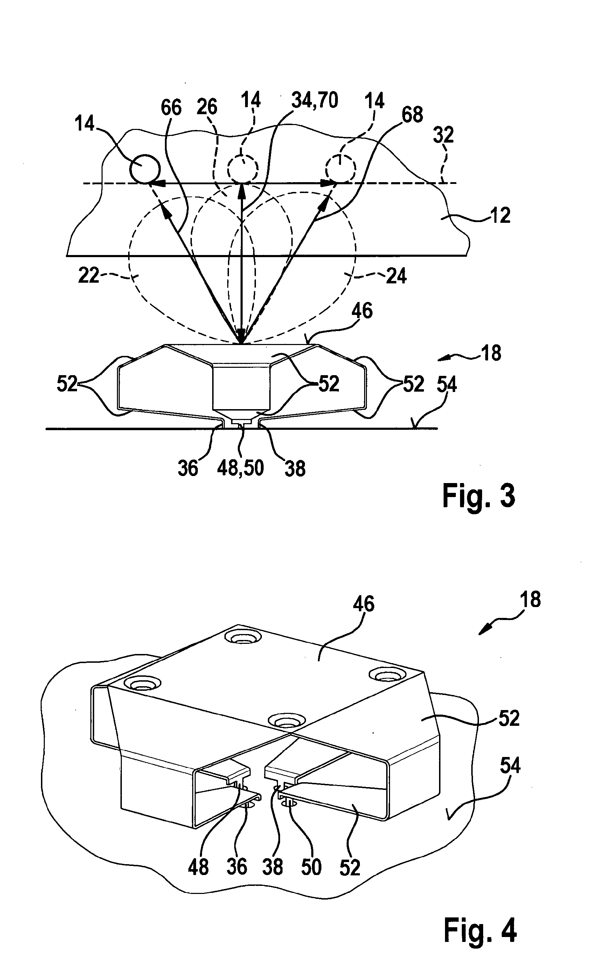

Wie Figur 2 zeigt, weist die Handortungsvorrichtung 10 eine Sende- und/oder Empfangseinheit 16 mit einer Antenne 18 und einer Schalteinheit 20 auf. Die Antenne 18 weist auf einer Richtung parallel zu der Oberfläche drei je nach Beschaltung der Antenne 18 verschiedene Sende- und/oder Empfangscharakteristiken 22, 24, 26 auf. Die Sende- und/oder Empfangscharakteristiken 22, 24, 26 sind in Figur 3 als schematische Antennendiagramme eingezeichnet. Die Antenne 18 ist als eine in den Figuren 3 und 4 näher dargestellte LCR-Antenne ausgebildet. Die Antenne 18 weist einen quadratischen Flächenstrahler 46, vier Schnittstellen 36, 38, 48, 50 und vier Anpassungsroittel 52 auf. Die Anpassungsmittel 52 verbinden jeweils eine der Schnittstellen 36, 38, 48, 50 mit dem Flächenstrahler 46. Zwei gegenüberliegende Schnittstellen 36, 38 sind elektrisch leitend mit der Schalteinheit 20 verbunden. Zwei der Schnittstellen 48, 50 sind nur mechanisch befestigt und dienen lediglich einer Stabilisierung des Flächenstrahlers 46. Alternativ könnte eine Antenne auch nur zwei Schnittstellen aufweisen. Der Flächenstrahler 46 verläuft parallel zu einer Massefläche 54 der Antenne 18. Die Anpassungsmittel 52 weisen parallel zu dem Flächenstrahler 46 einen dreieckförmigen Verlauf auf. Sie passen einen Wellenwiderstand des Flächenstrahlers 46 an einen Wellenwiderstand von Leitungen, die die zwei Schnittstellen 36, 38 mit der Schalteinheit 20 verbinden, an. Der Wellenwiderstand der Leitungen beträgt 50 Ohm.

Die Schalteinheit 20 schaltet bei einem Betrieb zwischen drei verschiedenen Sende- und/oder Empfangscharakteristiken 22, 24, 26 um. Dazu weist die Schalteinheit 20 ein Phasen- und/oder Amplitudenstellglied 56 und einen Abschlusswiderstand 58 auf. Ein Phasenglied verschiebt eine Phase eines durchlaufenden Signals zwischen Eingang und Ausgang um 180 Grad. Das Phasen- und/oder Amplitudenstellglied 56 ist fest mit einer der Schnittstellen 38 verbunden. Alternativ könnte das Phasen- und/oder Amplitudenstellglied 56 je nach Betriebszustand unterschiedlich verschaltet sein. Der Abschlusswiderstand 58 ist dazu vorgesehen, eine der Schnittstellen 36, 38 reflexionsfrei abzuschließen. Dazu ist der Abschlusswiderstand 58 mit den Schnittstellen 36, 38 der Antenne 18 leitend verbindbar.

Die Handortungsvorrichtung 10 weist eine Auswerteeinheit 28, einen Signalgenerator 60, eine Antennenweiche 62 und einen Demodulator 64 auf. Der Signalgenerator 60 erzeugt ein Sendesignal, und zwar von der Auswerteeinheit 28 zu einer Auswertung des Demodulators 64 passend gesteuert. Die Antennenweiche 62 leitet das Sendesignal von dem Signalgenerator 60 zu der Schalteinheit 20 und ein von der Antenne 18 empfangenes Empfangssignal von der Schalteinheit 20 zu dem Demodulator 64. Alternativ könnte eine Handortungsvorrichtung getrennte Sende- und Empfangsantennen aufweisen, von denen insbesondere nur eine Sende- und/oder Empfangscharakteristik nur einer Sendeantenne oder nur einer Empfangsantenne umgeschaltet wird. Durch ein Aussenden und ein Empfangen eines Ortungssignals bestimmt die Auswerteeinheit 28 vorteilhaft eine Distanz zwischen der Antenne 18 und dem Messobjekt 14, zumindest jedoch eine Information über eine Existenz und/oder eine laterale Position des Messobjekts 14 in der Sende- und/oder Empfangscharakteristik.

Zusätzlich bestimmt die Auswerteeinheit 28 aus den Signalen zumindest eine Information über eine Position des Messobjekts 14 auf zumindest einer Geraden 32 senkrecht zu einer mittleren Detektionsrichtung 34. Die Schalteinheit 20 schaltet die erste Sende- und/oder Empfangscharakteristik 22, indem sie das Sendesignal auf die erste Schnittstelle 36 der Antenne 18 legt und die zweite Schnittstelle 38 der Antenne 18 reflexionsfrei abschließt. Eine Hauptstrahlrichtung 66 der ersten Sende- und/oder Empfangscharakteristik 22 weist etwa einen Winkel von 20 Grad in eine erste Richtung relativ zu einer mittleren Detektionsrichtung 34 der Antenne 18 auf. Die Schalteinheit 20 schaltet die zweite Sende- und/oder Empfangscharakteristik 24, indem sie das Sendesignal auf die zweite Schnittstelle 38 der Antenne 18 legt und die erste Schnittstelle 36 der Antenne 18 reflexionsfrei abschließt. Eine Hauptstrahlrichtung 68 der zweiten Sende- und/oder Empfangscharakteristik 24 weist etwa einen Winkel von 20 Grad in einer zu der ersten Richtung entgegen gesetzten Richtung zu der mittleren Detektionsrichtung 34 der Antenne 18 auf. Die Schalteinheit 20 schaltet die dritte Sende- und/oder Empfangscharakteristik 26, indem sie das Sendesignal direkt auf die erste Schnittstelle 36 der Antenne 18 und über das Phasen- und/oder Amplitudenstellglied 56 auf die zweite Schnittstelle 36 der Antenne 18 legt. Die Schalteinheit 20 speist dabei ein Sendesignal mit zwei unterschiedlichen Phasenwinkeln und/oder Amplituden in zwei Schnittstellen 36, 38 der Antenne 18 ein. Eine Hauptstrahlrichtung 70 der dritten Sende- und/oder Empfangscharakteristik 26 verläuft parallel zu der mittleren Detektionsrichtung 34 der Antenne 18. Somit ist die Schalteinheit 20 dazu vorgesehen, zwischen drei Sende- und/oder Empfangscharakteristiken 22, 24, 26 der einzelnen Antenne 18 umzuschalten.

Die Auswerteeinheit 28 weist eine Auswerteroutine 30 auf, die bei einem Messvorgang aus Signalen, die mit den Sende- und/oder Empfangscharakteristiken 22, 24, 26 empfangen wurden, zumindest eine Positionsinformation über das Messobjekt 14 ermittelt, und zwar auf der Geraden 32 senkrecht zu der mittleren Detektionsrichtung 34. Wenn ein mit der ersten oder mit der zweiten Sende- und/oder Empfangscharakteristik 22, 24 empfangenes Empfangssignal größer ist als das jeweils andere, dann liegt das Messobjekt 14 auf einer dieser Sende- und/oder Empfangscharakteristik 22, 24 zugeordneten Seite der mittleren Detektionsrichtung 34. Die Auswerteeinheit 28 vergleicht eine Amplitude, eine Phasenlage und/oder eine Amplitude und eine Phase des Empfangssignals.

Die Auswerteeinheit 28 bildet zudem eine Differenz aus Empfangssignalen, die mit der ersten und der zweiten Sende- und/oder Empfangscharakteristik 22, 24 empfangen wurden. Von homogenen Objekten, beispielsweise von einer Oberfläche der Wand 12, reflektierte Signale sind bei beiden Empfangssignalen gleich groß und werden durch die Bildung der Differenz herausgemittelt. Die Auswerteeinheit 28 vergleicht die Differenz mit einem Schwellwert. Wenn die Differenz größer als der Schwellwert ist, dann ist das Messobjekt 14 auf der der entsprechenden Sende- und/oder Empfangscharakteristik 22, 24 zugeordneten Seite angeordnet. Wenn die Differenz kleiner als der Schwellwert ist und ein Empfangssignal, das mit der dritten Sende- und/oder Empfangscharakteristik 26 empfangen wurde, größer als ein weiterer Schwellwert ist, dann ist das Messobjekt 14 zumindest im Wesentlichen mittig auf der mittleren Detektionsrichtung 34 angeordnet. Eine solche Positionsbestimmung ist dabei deutlich genauer als eine Positionsbestimmung nur mittels der dritten Sende- und/oder Empfangscharakteristik 26. Ein lateraler Ortungsbereich kann hierdurch eingeschränkt werden. Wenn die Differenz kleiner als der Schwellwert ist und ein Empfangssignal, das mit der dritten Sende- und/oder Empfangscharakteristik 26 empfangen wurde, kleiner als der weitere Schwellwert ist, dann sind mehrere Messobjekte 14 in einem Empfangsbereich der Antenne 18 angeordnet. Durch einen Vergleich der Empfangssignale der verschiedenen Sende- und/oder Empfangscharakteristiken 22, 24, 26 in Korrelation mit der Bestimmung der Distanz ist eine stufenlose und genaue Positionsbestimmung eines einzelnen Messobjekts 14 möglich.

Durch eine Beschaltung von den vier Schnittstellen 36, 38, 48, 50 der Antenne 18 könnte eine Auswerteeinheit aus empfangenen Signalen zumindest eine Information über eine Position eines Messobjekts auf zumindest einer Fläche senkrecht zu der mittleren Detektionsrichtung 34 der Antenne 18 bestimmen. Die Antenne 18 weist in diesem Fall auf einer Ebene parallel zu der Oberfläche fünf je nach Beschaltung der Antenne 18 verschiedene Sende- und/oder Empfangscharakteristiken 22, 24, 26 auf. Des Weiteren könnte durch eine gleichphasige Ansteuerung der beiden Schnittstellen 36, 38 der Antenne 18 eine weitere nicht näher dargestellte bereite Sende- und/oder Empfangscharakteristik der Antenne erreicht werden.

## Patentansprüche

1. Handortungsvorrichtung, zur Detektion von in einem Medium (12) eingeschlossenen Objekten (14), mit einer Sende- und/oder Empfangseinheit (16), die zumindest eine Antenne (18) aufweist, **dadurch gekennzeichnet, dass** die Sende- und/oder Empfangseinheit (16) zumindest eine Schalteinheit (20) aufweist, die dazu vorgesehen ist, zwischen wenigstens zwei Sende- und/oder Empfangscharakteristiken (22, 24, 26) einer einzelnen Antenne (18) umzuschalten, wobei die wenigstens zwei Sende- und/oder Empfangscharakteristiken (22, 24, 26) als Richtcharakteristiken der Sende- und/oder Empfangseinheit (16) ausgebildet sind.

2. Handortungsvorrichtung nach Anspruch 1, **dadurch gekennzeichnet, dass** die Sende- und/oder Empfangseinheit (16) dazu vorgesehen ist, mindestens eine Sendecharakteristik (26) mit einer Hauptstrahlrichtung (34), die nicht orthogonal zur Antennenoberfläche (46) der Antenne (18) ausgerichtet ist, zu erzeugen.

3. Handortungsvorrichtung nach Anspruch 1 oder 2, **gekennzeichnet durch** eine Auswerteeinheit (28), die dazu vorgesehen ist, aus Signalen, die zumindest mit den wenigstens zwei Sende- und/oder Empfangscharakteristiken (22, 24, 26) empfangen wurden, zumindest eine Positionsinformation über das Messobjekt (14) zu ermitteln.

4. Handortungsvorrichtung nach Anspruch 3, **dadurch gekennzeichnet, dass** die Auswerteeinheit (28) eine Auswerteroutine (30) aufweist, die dazu vorgesehen ist, aus den Signalen zumindest eine Information über eine Position des Messobjekts (14) auf zumindest einer Geraden (32) senkrecht zu einer mittleren Detektionsrichtung (34) zu bestimmen.

5. Handortungsvorrichtung zumindest nach Anspruch 3, **dadurch gekennzeichnet, dass** die Auswerteeinheit (28) dazu vorgesehen ist, eine Differenz der Signale mit einem Schwellwert zu vergleichen.

6. Handortungsvorrichtung nach einem der vorhergehenden Ansprüche, **dadurch gekennzeichnet, dass** die Schalteinheit (20) dazu vorgesehen ist, ein Sendesignal mit zumindest zwei unterschiedlichen Phasenwinkeln und/oder Amplituden in zumindest eine Schnittstelle (36, 38) der Antenne (18) einzuspeisen.

7. Handortungsvorrichtung nach einem der vorhergehenden Ansprüche, **dadurch gekennzeichnet, dass** die Schalteinheit (20) dazu vorgesehen ist, zumindest eine Schnittstelle (36, 38) der Antenne (18) in unterschiedlichen Betriebszuständen reflexionsfrei abzuschließen, wobei weniger als 20 dB einer von der Antenne (18) über die zumindest eine Schnittstelle (36, 38) in die Schalteinheit (20) geleiteten elektrischen Leistung zurück zur Antenne (18) reflektiert werden.

8. Handortungsvorrichtung nach zumindest einem der vorherigen Ansprüche, **dadurch gekennzeichnet, dass** die Antenne (18) zumindest zwei Symmetrieebenen besitzt.

9. Handortungsvorrichtung nach zumindest einem der vorherigen Ansprüche, **dadurch gekennzeichnet, dass** die Antenne (18) als eine LCR-Antenne ausgebildet ist.

10. Handortungsgerät mit zumindest einer Handortungsvorrichtung (10) nach einem der vorhergehenden Ansprüche.

11. Handortungsgerät nach Anspruch 10, **dadurch gekennzeichnet, dass** eine Ausgabeeinheit vorgesehen ist, die es ermöglicht, eine Richtungsinformation, betreffend die Lage eines detektierten Objektes relativ zum Ortungsgerät anzuzeigen.

12. Handwerkzeug mit einer Handortungsvorrichtung (10) nach einem der Ansprüche 1 bis 9.

13. Verfahren, insbesondere Verfahren zur Ortung eines in einer Wand (12) angeordneten Messobjekts (14), mit einer Handortungsvorrichtung (10), insbesondere nach einem der Ansprüche 1 bis 9, die eine Antenne (18) aufweist, **dadurch gekennzeichnet, dass** zwischen wenigstens zwei Sende- und/oder Empfangscharakteristiken (20, 22, 24) umgeschaltet wird.

14. Verfahren nach Anspruch 13, **dadurch gekennzeichnet, dass** zumindest eine Sendecharakteristik (26) eine nicht-orthogonale Hauptabstrahlrichtung zur Antennenoberfläche besitzt.

15. Verfahren nach Anspruch 13 oder 14, **dadurch gekennzeichnet, dass** nach einen Vergleich der Empfangssignale für verschiedene Abstrahlcharakteristiken entschieden wird, ob sich ein Zielobjekt direkt vor dem Messsystem oder in einem Winkel zu ihm befindet, wobei sich die Abstrahlcharakteristiken durch verschiedene Hauptstrahlrichtungen auszeichnen.

16. Verfahren nach zumindest einem der vorherigen Ansprüche 13 bis 15, **dadurch gekennzeichnet, dass** eine Winkelinformation ausgegeben wird, die die relative Lage eines Objektes zu dem Messgerät signalisiert.

## Claims

1. Hand-held locating device for detecting objects (14) enclosed in a medium (12), with a transmitting and/or receiving unit (16) which has at least one antenna (18), **characterized in that** the transmitting and/or receiving unit (16) has at least one switching unit (20) which is provided for switching over between at least two transmission and/or reception characteristics (22, 24, 26) of an individual antenna (18), the at least two transmission and/or reception characteristics (22, 24, 26) being designed as directional characteristics of the transmitting and/or receiving unit (16).

2. Hand-held locating device according to Claim 1, **characterized in that** the transmitting and/or receiving unit (16) is provided for producing at least one transmission characteristic (26) with a main beam direction (34) which is not aligned orthogonal to the antenna surface (46) of the antenna (18).

3. Hand-held locating device according to Claim 1 or 2, **characterized by** an evaluation unit (28) which is provided for determining at least one item of position information relating to the measurement object (14) from signals which have been received at least with the aid of the at least two transmission and/or reception characteristics (22, 24, 26).

4. Hand-held locating device according to Claim 3, **characterized in that** the evaluation unit (28) has an evaluation routine (30) which is provided for determining from the signals at least one item of information relating to a position of the measurement object (14) on at least one straight line (32) perpendicular to a mean detection direction (34).

5. Hand-held locating device at least according to Claim 3, **characterized in that** the evaluation unit (28) is provided for comparing a difference in the signals with a threshold value.

6. Hand-held locating device according to one of the preceding claims, **characterized in that** the switching unit (20) is provided for feeding a transmission signal with at least two different phase angles and/or amplitudes into at least one interface (36, 38) of the antenna (18).

7. Hand-held locating device according to one of the preceding claims, **characterized in that** the switching unit (20) is provided for closing without reflections at least one interface (36, 38) of the antenna (18) in different operating states, less than 20 dB of an electric power led into the switching unit (20) by the antenna (18) via the at least one interface (36, 38) being reflected back to the antenna (18).

8. Hand-held locating device according to at least one of the preceding claims, **characterized in that** the antenna (18) has at least two planes of symmetry.

9. Hand-held locating device according to at least one of the preceding claims, **characterized in that** the antenna (18) is designed as an LCR antenna.

10. Hand-held locating unit with at least one hand-held locating device (10) according to one of the preceding claims.

11. Hand-held locating unit according to Claim 10, **characterized in that** an output unit is provided which enables an item of direction information concerning the position of a detected object relative to the locating unit to be displayed.

12. Hand-held tool with a hand-held locating device (10) according to one of Claims 1 to 9.

13. Method, in particular a method for locating a measurement object (14) arranged in a wall (12) with a hand-held locating device (10), in particular according to one of Claims 1 to 9, which has an antenna (18), **characterized in that** there is switching over between at least two transmission and/or reception characteristics (20, 22, 24).

14. Method according to Claim 13, **characterized in that** at least one transmission characteristic (26) has a non-orthogonal main emission direction relative to the antenna surface.

15. Method according to Claim 13 or 14, **characterized in that** it is decided after a comparison of the received signals for various emission characteristics whether a target object is located directly in front of the measurement system or at an angle to it, the emission characteristics being distinguished by various main beam directions.

16. Method according to at least one of the preceding Claims 13 to 15, **characterized in that** an item of angle information is output which indicates the position of an object relative to the measuring instrument.

## Revendications

1. Dispositif manuel de localisation permettant de détecter des objets (14) englobés dans un fluide (12) et présentant une unité (16) d'émission et/ou de réception dotée d'au moins une antenne (18), **caractérisé en ce que**
l'unité d'émission et/ou de réception (16) présente au moins une unité de commutation (20) prévue pour commuter entre au moins deux caractéristiques d'émission et/ou de réception (22, 24, 26) d'une seule antenne (18) et
**en ce que** les deux ou plusieurs caractéristiques d'émission et/ou de réception (22, 24, 26) sont configurées comme caractéristiques d'orientation de l'unité d'émission et/ou de réception (16).

2. Dispositif manuel de localisation selon la revendication 1, **caractérisé en ce que** l'unité (16) d'émission et/ou de réception est prévue pour former au moins une caractéristique d'émission (26) dotée d'une direction principale de rayonnement (34) qui n'est pas orientée perpendiculairement à la surface (46) de l'antenne (18).

3. Dispositif manuel de localisation selon les revendications 1 ou 2, **caractérisé par** une unité d'évaluation (28) prévue pour déterminer au moins une information de position concernant l'objet de mesure (14) à partir de signaux qui ont été reçus au moins avec les deux ou plusieurs caractéristiques d'émission et/ou de réception (22, 24, 26).

4. Dispositif manuel de localisation selon la revendication 3, **caractérisé en ce que** l'unité d'évaluation (28) présente une routine d'évaluation (30) prévue pour déterminer au moins une information concernant la position de l'objet de mesure (14) sur au moins une droite (32) perpendiculaire à une direction centrale de détection (34).

5. Dispositif manuel de localisation selon au moins la revendication 3, **caractérisé en ce que** l'unité d'évaluation (28) est prévue pour comparer la différence des signaux à une valeur de seuil.

6. Dispositif manuel de localisation selon l'une des revendications précédentes, **caractérisé en ce que** l'unité de commutation (20) est prévue pour injecter un signal d'émission qui présente au moins deux angles de phases différents et/ou amplitudes différentes dans au moins une interface (36, 38) de l'antenne (18).

7. Dispositif manuel de localisation selon l'une des revendications précédentes, **caractérisé en ce que** l'unité de commutation (20) est conçue pour exclure sans réflexion au moins une interface (36, 38) de l'antenne (18) dans différents états de fonctionnement, moins de 20 dB d'une puissance électrique amenée par l'antenne (18) dans l'unité de commutation (20) par l'intermédiaire de la ou des interfaces (36, 38) étant réfléchis en retour vers l'antenne (18).

8. Dispositif manuel de localisation selon au moins l'une des revendications précédentes, **caractérisé en ce que** l'antenne (18) possède au moins deux plans de symétrie.

9. Dispositif manuel de localisation selon au moins l'une des revendications précédentes, **caractérisé en ce que** l'antenne (18) est configurée comme antenne LCR.

10. Appareil manuel de localisation doté d'au moins un ensemble manuel de localisation (10) selon au moins l'une des revendications précédentes.

11. Appareil manuel de localisation selon la revendication 10, **caractérisé en ce qu'**une unité d'émission est prévue est permet d'afficher une information d'orientation qui concerne la position d'un objet détecté par rapport à l'appareil de localisation.

12. Outil manuel doté d'un ensemble manuel de localisation (10) selon l'une des revendications 1 à 9.

13. Procédé, notamment procédé de localisation d'un objet de mesure (14) disposé dans une paroi (12) et doté d'un ensemble manuel de localisation (10), en particulier selon l'une des revendications 1 à 9, qui présente une antenne (18),
**caractérisé en ce que**
on bascule entre au moins deux caractéristiques d'émission et/ou de réception (20, 22, 24).

14. Procédé selon la revendication 13, **caractérisé en ce qu'**au moins une caractéristique d'émission (26) possède une direction principale d'émission non perpendiculaire à la surface de l'antenne.

15. Procédé selon les revendications 13 ou 14, **caractérisé en ce qu'**après une comparaison des signaux de réception pour différentes caractéristiques d'émission, il est décidé si un objet cible se trouve directement devant l'objet de mesure ou à un angle par rapport à ce dernier, les caractéristiques d'émission **se caractérisant par** différentes direction principales d'émission.

16. Procédé selon au moins l'une des revendications 13 à 15 qui précèdent, **caractérisé en ce qu'**une information angulaire qui signale la position relative d'un objet par rapport à l'appareil de mesure est délivrée.
